# FASCICULE DE BREVET EUROPEEN

(11) **EP 3 681 786 B1**
(45) Date de publication et mention de la délivrance du brevet: **01.11.2023**
(21) Numéro de dépôt: 18788668.4
(22) Date de dépôt: 11.09.2018
(51) Int. Cl.: B62D 25/02, B62D 25/04, B62D 25/16

(54) **AGENCEMENT DE CÔTÉ DE CAISSE DE VÉHICULE AUTOMOBILE**
KRAFTFAHRZEUGKAROSSERIESEITENANORDNUNG
MOTOR VEHICLE BODY SIDE ARRANGEMENT

(30) Priorité: 12.09.2017 FR 1758431
(43) Date de publication de la demande: 22.07.2020
(73) Titulaire: Renault s.a.s, 92100 Boulogne Billancourt (FR)
(72) Inventeur: CABRAL, Guillaume, 77170 Brie Comte Robert (FR); PIC, Aurélien, 91190 Gif Sur Yvette (FR)
(74) Mandataire: Renault Group
(86) Numéro de dépôt international: PCT/EP2018/074464
(87) Numéro de publication internationale: WO 2019/053007

(56) Documents cités:
- EP-A1- 2 371 678
- EP-A1- 2 978 657
- EP-A1- 3 042 830

## Description

La présente invention porte sur un agencement au sein d'un véhicule automobile au niveau de la jonction entre un côté de caisse et un capot et/ou une aile avant. L'invention porte également sur un véhicule automobile comprenant un tel agencement.

Un véhicule automobile de l'état de la technique comprend généralement une caisse sur laquelle sont assemblés divers éléments de carrosserie. Parmi ces éléments de carrosserie, deux côtés de caisse s'étendent au moins en partie de chaque côté du pare-brise, c'est-à-dire sur chaque montant de baie de pare-brise de la caisse, comme cela est décrit dans EP2978657A1. Ainsi, le côté de caisse droit s'étend depuis un capot avant et/ou une aile avant droite jusqu'au toit, aussi nommé pavillon, et se prolonge généralement vers l'arrière du véhicule automobile. Evidemment, le côté de caisse gauche s'étend depuis le capot avant et/ou une aile avant gauche.

La qualité d'un véhicule automobile étant souvent évaluée par les consommateurs à partir de l'apparence de la carrosserie, les jeux entre les éléments de carrosserie contigus revêtent une certaine importance. Ainsi, des jeux minimes et constants entre les éléments de carrosserie sont interprétés comme une excellente qualité de finition.

Seulement, pour des éléments de carrosserie tels que des côtés de caisse, en particulier des pointes de côtés de caisse rejoignant le capot avant et/ou les ailes avant, il est complexe d'obtenir des jeux minimes et constants. En effet, l'esthétique ou design engendre généralement un porte à faux important des côtés de caisse compliqué à maîtriser.

Le but de l'invention est de fournir une solution remédiant aux inconvénients ci-dessus. En particulier, l'invention propose un agencement simple à intégrer dans une chaîne de montage et/ou d'assemblage et peu onéreux. Par montage, on entend une mise en place démontable d'un élément, par exemple par vissage. Par assemblage, on entend une mise en place non démontable d'un élément, par exemple par soudage.

Pour atteindre cet objectif, l'invention porte sur un agencement au sein d'un véhicule automobile comprenant un côté de caisse et une caisse, l'agencement comprenant un raidisseur de côté de caisse, tel un raidisseur d'une pointe avant du côté de caisse, le raidisseur étant fixé d'une part sur la caisse et d'autre part sur le côté de caisse, le raidisseur a une forme de cornière comprenant une première aile et une deuxième aile, la deuxième aile du raidisseur comprend une oreille, notamment une oreille disposée à une extrémité distale de la deuxième aile par rapport à la première aile.

La première aile du raidisseur peut être fixée à la caisse, notamment à un renfort de pied avant de la caisse, la deuxième aile du raidisseur pouvant être fixée au côté de caisse, notamment à la pointe avant du côté de caisse.

La première aile du raidisseur peut s'étendre transversalement ou sensiblement transversalement, la deuxième aile du raidisseur pouvant s'étendre longitudinalement ou sensiblement longitudinalement.

Le raidisseur et la caisse et/ou le raidisseur et le côté de caisse peuvent être fixés par soudage.

La première aile du raidisseur et/ou la deuxième aile du raidisseur peuvent être dotées de bords tombants.

Une pointe avant du côté de caisse peut venir en vis-à-vis d'une part avec un bord supérieur d'une aile avant et d'autre part avec un bord arrière d'un capot avant.

L'invention porte également sur un véhicule automobile comprenant un agencement tel que défini précédemment.

Ces objets, caractéristiques et avantages de la présente invention seront exposés en détail dans la description suivante du mode de réalisation de l'invention fait à titre non-limitatif en relation avec les figures jointes parmi lesquelles :
La figure 1 représente une vue schématique d'un véhicule automobile selon un mode de réalisation de l'invention.
La figure 2 représente une vue de détail en perspective du véhicule automobile selon le mode de réalisation de l'invention.
La figure 3 représente une vue en perspective d'un agencement selon un mode de réalisation de l'invention.
La figure 4 représente une vue de détail en perspective de l'agencement selon le mode de réalisation de l'invention.
La figure 5 représente une autre vue en perspective de l'agencement selon le mode réalisation de l'invention.
La figure 6 représente une autre vue en perspective de l'agencement selon le mode réalisation de l'invention.

La direction selon laquelle le véhicule automobile se déplace en ligne droite est définie comme étant la direction longitudinale. Par convention, la direction perpendiculaire à la direction longitudinale, située dans un plan parallèle au sol, est nommée direction transversale. La troisième direction, perpendiculaire aux deux autres, est nommée direction verticale.

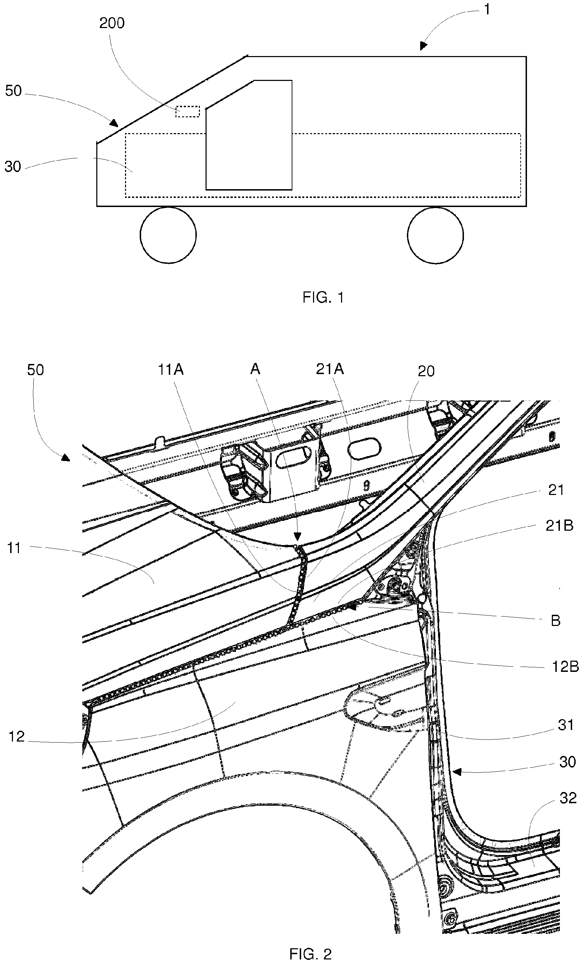

La figure 1 illustre un véhicule automobile 1 selon un mode de réalisation de l'invention. Le véhicule automobile 1 est doté d'une caisse 30 comprenant des éléments de caisse sur lesquels est fixée une carrosserie 50 comprenant des éléments de carrosserie. Le véhicule automobile 1 comprend un agencement 200 selon un mode de réalisation de l'invention.

Comme illustré plus précisément sur la figure 2, la carrosserie 50 comprend en particulier un capot avant 11, une aile avant 12 gauche et un côté de caisse 20 gauche.

Dans cette description, bien que seul le côté gauche soit illustré sur les figures, il ne sera pas mentionné davantage le côté concerné. En effet, le côté droit peut comprendre évidemment des éléments de carrosserie et/ou des éléments de caisse identiques ou sensiblement identiques, généralement symétriques ou sensiblement symétriques par rapport à un plan médian vertical et longitudinal du véhicule automobile 1. Ainsi, ce qui est décrit peut concerner aussi bien le côté gauche illustré que le côté droit non illustré.

Le côté de caisse 20 comprend de préférence une pointe avant 21 de côté de caisse 20. La pointe avant 21 s'étend vers l'avant, longitudinalement ou sensiblement longitudinalement, et est éventuellement dirigée vers le bas.

Le côté de caisse 20 est une pièce de carrosserie, autrement dit une pièce qui est rendue visible de l'extérieur du véhicule étant donné qu'elle vient à recouvrement par l'extérieur de la caisse ou de la structure de caisse. A titre d'exemple, la pointe avant 21 est une extrémité avant d'un montant de baie.

La pointe avant 21 de côté de caisse 20 rejoint le capot avant 11. Dans ce cas, un bord arrière 11A du capot avant 11 se retrouve à proximité d'un bord avant 21A de la pointe avant 21. Un jeu A sépare alors le capot avant 11 de la pointe avant 21 du côté de caisse 20. D'une part ce jeu A comprend un écart entre le bord arrière 11A du capot avant 11 et le bord avant 21A de la pointe avant 21. D'autre part le jeu A comprend une éventuelle différence de niveaux entre la surface du capot avant 11, à proximité du bord arrière 11A, et la surface de la pointe avant 21, à proximité du bord avant 21A.

De la même manière, la pointe avant 21 de côté de caisse 20 rejoint l'aile avant 12. Dans ce cas, un bord supérieur 12B de l'aile avant 12 se retrouve à proximité d'un bord inférieur 21B de la pointe avant 21. Un jeu B sépare alors l'aile avant 12 de la pointe avant 21 du côté de caisse 20. D'une part ce jeu B comprend un écart entre le bord supérieur 12B de l'aile avant 12 et le bord inférieur 21B de la pointe avant 21. D'autre part le jeu B comprend une éventuelle différence de niveaux entre la surface de l'aile avant 12, à proximité du bord supérieur 12B, et la surface de la pointe avant 21, à proximité du bord inférieur 21B.

Comme illustré sur la figure 2, la pointe avant 21 rejoint à la fois le capot avant 11 et l'aile avant 12, les jeux A et B étant donc présents.

Comme évoqué précédemment, de tels jeux A, B sont difficiles à maîtriser. D'une part on souhaite que les écarts des jeux A, B soient constants sur toute leur longueur et d'autre part on souhaite qu'ils soient minimes, c'est-à-dire de l'ordre de quelques millimètres seulement. Ainsi, de préférence, les écarts des jeux A et B sont compris entre 2 et 4 mm, par exemple de l'ordre de 3,5 mm. De plus, le côté de caisse 20 peut être un élément de carrosserie avec de grandes dimensions (plusieurs mètres) puisqu'il peut s'étendre depuis le capot avant 11 et/ou l'aile avant 12 jusqu'à l'arrière, par exemple jusqu'à l'emplacement de feux arrière. Enfin, le côté de caisse 20 est par exemple en tôle d'acier de seulement 0,7 mm c'est pourquoi sa pointe avant 21 est difficile à maîtriser géométriquement, d'autant qu'elle peut être exposée à une déformation via des sollicitations extérieures au cours du cycle de vie du véhicule automobile 1.

Enfin, on souhaite généralement obtenir des écarts de jeux A, B de même valeur ou sensiblement de même valeur et réguliers, au plus proche de la valeur cible. En outre, on souhaite que la différence de niveaux du jeu A entre le capot avant 11 et la pointe avant 21 et la différence de niveaux du jeu B entre l'aile avant 12 et la pointe avant 21 soient très faibles voire nulles, c'est-à-dire qu'il y ait affleurement ou quasi affleurement des surfaces des éléments de carrosserie contigus.

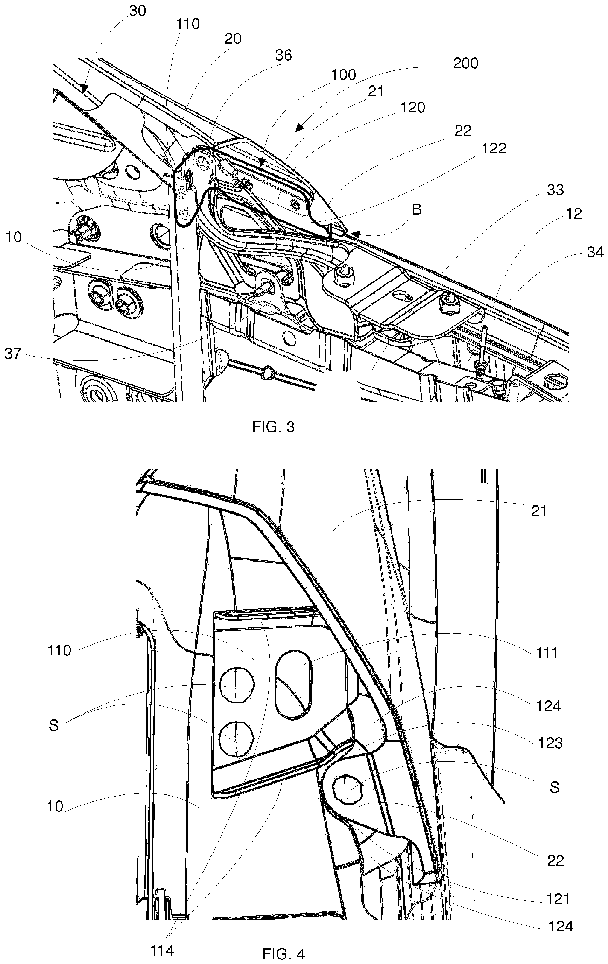

Comme illustré sur les figures 3 et 4, un agencement 200 selon un mode de réalisation de l'invention au sein du véhicule automobile 1 comprend le côté de caisse 20, la caisse 30 ainsi qu'un raidisseur 100 de côté de caisse 20. Ce raidisseur 100 a pour rôle de raidir le côté de caisse 20, en particulier sa pointe avant 21. Ainsi, le côté de caisse 20 et en particulier sa pointe avant 21 sont maintenus rigidement par rapport à l'aile avant 12 et/ou le capot avant 11 (non représenté sur les figures 3 à 6) lors de l'assemblage et/ou du montage et au cours du cycle de vie du véhicule automobile 1. Pour ce faire, le raidisseur 100 est fixé d'une part sur la caisse 30 et d'autre part sur le côté de caisse 20.

De préférence, le raidisseur 100 a une forme de cornière comprenant une première aile 110 et une deuxième aile 120. En effet, le raidisseur 100 présente une première aile 110 perpendiculaire ou sensiblement perpendiculaire à une deuxième aile 120.

La première aile 110 du raidisseur 100 est de préférence fixée à la caisse 30, par exemple sur un élément de caisse tel qu'un renfort de pied avant 10.

La deuxième aile 120 du raidisseur 100 est fixée au côté de caisse 20, de préférence sur la pointe avant 21 du côté de caisse 20.

La première aile 110 du raidisseur 100 s'étend de préférence transversalement ou sensiblement transversalement. Préférentiellement, la première aile 110 a sensiblement une forme de plaque rectangulaire dont la longueur s'étend transversalement ou sensiblement transversalement, la largeur s'étendant verticalement ou sensiblement verticalement. Son extrémité est orientée vers le centre du véhicule automobile. La deuxième aile 120 du raidisseur 100 s'étend de préférence longitudinalement vers l'avant ou sensiblement longitudinalement. Préférentiellement, la deuxième aile 120 a sensiblement une forme de plaque rectangulaire dont la longueur s'étend longitudinalement ou sensiblement longitudinalement, la largeur s'étendant verticalement ou sensiblement verticalement.

A noter que ce raidisseur 100 peut être obtenu par des opérations simples de découpe et/ou poinçonnage d'une tôle, par exemple une tôle en acier, suivies d'opérations de pliage. La première aile 110 du raidisseur 100 et/ou la deuxième aile 120 du raidisseur 100 peuvent être dotés de bords tombants 114, 124. De tels bords tombant 114, 124 augmentent la rigidité de la cornière ou équerre que constitue le raidisseur 100. Cette augmentation de rigidité rend possible l'utilisation d'une tôle de faible épaisseur, par exemple comprise entre 1 mm et 3 mm, de préférence 1,2 mm, pour fabriquer ce raidisseur 100. Comme illustré sur la figure 4, la première aile 110 peut être dotée d'un orifice 111 destiné à accrocher le raidisseur 100 au cours d'un traitement cataphorèse si le raidisseur 100 est mis en place après passage de la caisse en traitement cataphorèse, ou à limiter les surfaces d'accostage afin de garantir une bonne tenue corrosion si le raidisseur 100 est mis en place sur caisse avant passage en bain de cataphorèse. Evidemment, un tel orifice pourrait être positionné ailleurs sur le raidisseur 100. Alternativement, le raidisseur 100 n'est pas doté d'orifice 111, le raidisseur 100 étant déjà assemblé sur la caisse avant le traitement cataphorèse.

Afin de rigidifier davantage la pointe avant 21 et de faciliter sa fixation avec la deuxième aile 120, la deuxième aile 120 du raidisseur 100 comprend une oreille 121. Cette oreille 121 est par exemple disposée à une extrémité distale 122 de la deuxième aile 120 par rapport à la première aile 110. De préférence cette oreille 121 est créée en repliant le coin supérieur 123 de l'extrémité distale 122 de sorte à ce que l'oreille 121 se retrouve orientée vers l'intérieur du véhicule automobile 1. Ce pliage peut être par exemple compris entre 60° et 120°, de préférence proche de 90°. Une languette 22 s'étend depuis le bord avant 21A de la pointe avant 21 du côté de caisse 20. Cette languette 22 a une forme similaire à celle de l'oreille 121 et est orientée de la même manière que l'oreille 121 vers l'intérieur du véhicule automobile 1. La languette 22 peut ainsi être assemblée directement sur le raidisseur 100 via l'oreille 121 de la deuxième aile 120 du raidisseur 100.

Préférentiellement, le raidisseur 100 et la caisse 30 et/ou le raidisseur 100 et le renfort de pied avant 10 sont fixés par soudage. Préférentiellement, le raidisseur 100 et le côté de caisse 20 et/ou le raidisseur 100 et la pointe avant 21 du côté de caisse 20 sont fixés par soudage. Plus précisément, la première aile 110 peut être assemblée par soudage avec le renfort de pied avant 10, par exemple par deux points de soudure S comme illustré sur la figure 4. De la même manière, la deuxième aile 120, en particulier l'oreille 121 de la deuxième aile 120, peut être assemblée par soudage, par exemple avec un point de soudure S, avec la languette 22 de la pointe avant 21 du côté de caisse 20. Evidemment, davantage de points de soudure S peuvent être prévus et leurs emplacements peuvent être différents de ceux illustrés sur la figure 4. Dans le mode de réalisation illustré, la languette 22 et l'oreille 121 étant dirigées vers l'intérieur du véhicule automobile 1, le point de soudure S entre elles deux demeure invisible une fois que le capot avant 11 est monté et mis en position fermée.

Ainsi, le raidisseur 100 fixé par exemple au renfort de pied avant 10 reprend le côté de caisse 20 afin de tenir la géométrie et maîtriser l'écart du jeu A entre la pointe avant 21 et le capot avant 11 ainsi que l'écart du jeu B entre la pointe avant 21 et l'aile avant 12. Les différences de niveaux des jeux A et B, que l'on souhaite infimes, sont également maîtrisés. En effet, un tel raidisseur 100 permet un assemblage précis de la géométrie de la pointe avant 21 du côté de caisse 20. En figeant cette pointe avant 21, il devient possible de contrôler les écarts et différences de niveaux ou affleurements des jeux A, B de la pointe avant 21 avec le capot avant 11 et avec l'aile avant 12. En effet, l'aile avant 12 s'étend par exemple directement sous la pointe avant 21. Le bord inférieur 21B de la pointe avant 21 vient alors face au bord supérieur 12B de l'aile avant 12. Ces deux bords 12B, 21B sont orientés parallèlement sensiblement en direction longitudinale. Le capot avant 11, en particulier son bord arrière 11A, s'étend par exemple directement face au bord avant 21A de la pointe avant 21. Le bord avant 21A de la pointe avant 21 vient alors face au bord arrière 11A du capot avant 11. Ces deux bords 11A, 21A sont orientés parallèlement sensiblement en direction verticale.

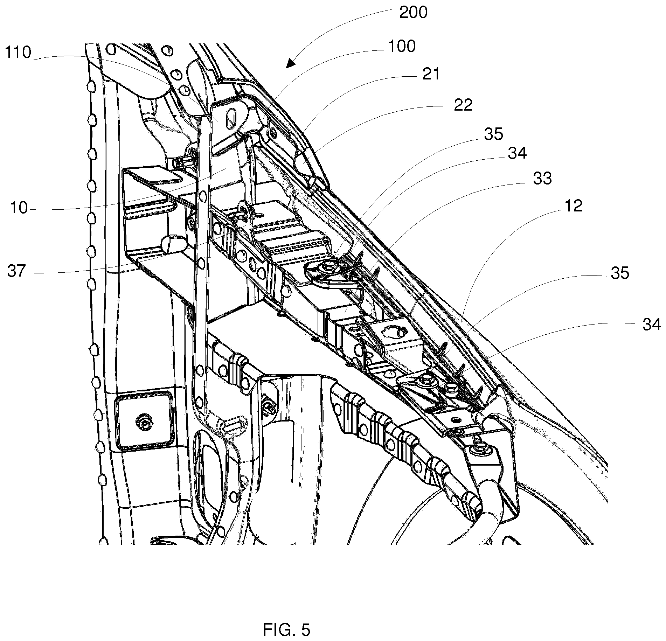

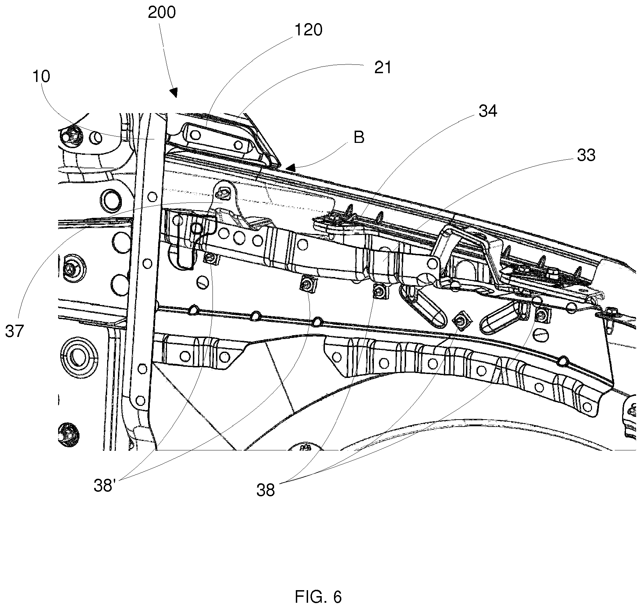

A noter que l'aile avant 12 peut être liée par exemple avec quatre fixations selon la direction transversale sur la hauteur d'un pied avant 31 et une fixation selon la direction verticale en bas du pied avant 31, à une extrémité d'un bavolet 32. Comme illustré sur la figure 5, l'aile avant 12 peut également être fixée avec deux fixations 35 selon la direction verticale sur une équerre 34, par exemple une équerre 34 vissée sur un renfort de doublure de pied 33. Enfin l'extrémité avant de l'aile avant 12 peut être fixée selon la direction verticale sur une équerre (non illustrée) qui se reprend sur la caisse 30. Ces fixations sont de préférence de type vis/écrou et offrent des possibilités de réglage, les vis étant par exemple insérées dans des trous de diamètre bien supérieur et/ou des trous oblongs. De préférence, comme illustré sur la figure 6, trois vis 38 sont utilisées pour le montage par vissage de l'équerre 34 sur le renfort de doublure de pied 33.

Ainsi, bien que le côté de caisse 20 soit de préférence soudé sur la caisse 30, le contrôle et les réglages de l'écart et/ou de la différence de niveaux du jeu B sont possibles. Il devient alors envisageable de régler le jeu B de sorte à ce que son écart soit de faible valeur et régulier et/ou que sa différence de niveaux soit infime et régulière, et ce, sur toute la longueur entre le bord supérieur 12B et le bord inférieur 21B.

A noter que la charnière 36 de capot avant 11 peut être fixée par exemple par deux fixations selon la direction verticale, sur une équerre 37. L'équerre 37 peut être fixée sur le renfort de doublure de pied 33. Comme illustré sur la figure 6, l'équerre 37 peut être fixée par exemple par deux vis 38' sur le renfort de doublure de pied 33. Ces vis 38' peuvent également servir de réglage. Ainsi l'équerre 37 est réglable en position par rapport au renfort de doublure de pied 33, c'est-à-dire par rapport à la caisse 30. Un tel réglage de l'équerre 37 permet évidemment d'agir sur le positionnement du capot avant 11 par rapport à la pointe avant 21, autrement dit d'agir sur le jeu A.

Ainsi, bien que le côté de caisse 20 soit de préférence soudé sur la caisse 30 le contrôle et les réglages de l'écart et/ou de la différence de niveaux du jeu A sont possibles. Il devient alors envisageable de régler le jeu A de sorte à ce que son écart soit de faible valeur et régulier et/ou que sa différence de niveaux soit infime et régulière, et ce, sur toute la longueur entre le bord arrière 11A et le bord avant 21A.

Ceci est rendu possible du fait que la pointe avant 21 soit figée par rapport à la caisse 30 grâce au raidisseur 100 fixé d'une part à la pointe avant 21 et d'autre part au renfort de pied avant 10 de la caisse 30. Evidemment le réglage de l'équerre 37 se faisant sur une certaine longueur vers l'avant, il permet également de régler le jeu entre le capot avant 11 et l'aile avant 12.

En remarque, la solution selon l'invention atteint donc l'objet recherché d'offrir des jeux A, B ayant des écarts de faible valeur, identiques ou sensiblement identiques et constants ou sensiblement constants sur leur longueur, et/ou ayant des différences de niveaux infimes voire nulles et présente les avantages suivants :
- le montage de l'aile avant 12 en usine n'est pas impacté et peut être standardisé,
- la charnière 36 de capot avant 11 étant contournée, la cinématique de montage spécifique selon la direction transversale peut être conservée,
- cette maîtrise de ces jeux par l'agencement selon l'invention peut être utilisée sur un véhicule automobile de type camion, camionnette, léger ou industriel, ou encore un véhicule de transport en commun.

L'invention est particulièrement bien adaptée à un véhicule automobile doté d'un côté de caisse 20 dont la pointe avant 21 vient faire face à un capot avant 11 et une aile avant 12. En résumé, l'invention permet d'offrir des jeux maîtrisés entre une pointe avant 21 de côté de caisse 20 et un capot avant 11 et/ou une aile avant 12.

## Revendications

1. Agencement (200) au sein d'un véhicule automobile (1) comprenant un côté de caisse (20) et une caisse (30), l'agencement (200) comprend un raidisseur (100) de côté de caisse (20), tel un raidisseur (100) d'une pointe avant (21) du côté de caisse (20), le raidisseur (100) étant fixé d'une part sur la caisse (30) et d'autre part sur le côté de caisse (20), le raidisseur (100) a une forme de cornière comprenant une première aile (110) et une deuxième aile (120), la deuxième aile (120) du raidisseur (100) comprend une oreille (121), notamment une oreille (121) disposée à une extrémité distale (122) de la deuxième aile (120) par rapport à la première aile (110), **caractérisé en ce**
**qu'**une pointe avant (21) du côté de caisse (20) vient en vis-à-vis d'une part avec un bord supérieur (12B) d'une aile avant (12) et d'autre part avec un bord arrière (11A) d'un capot avant (11).

2. Agencement (200) selon la revendication précédente, **caractérisé en ce que** la première aile (110) du raidisseur (100) est fixée à la caisse (30), notamment à un renfort de pied avant (10) de la caisse (30), la deuxième aile (120) du raidisseur (100) étant fixée au côté de caisse (20), notamment à la pointe avant (21) du côté de caisse (20).

3. Agencement (200) selon la revendication 1 ou 2, **caractérisé en ce que** la première aile (110) du raidisseur (100) s'étend transversalement ou sensiblement transversalement, la deuxième aile (120) du raidisseur (100) s'étendant longitudinalement ou sensiblement longitudinalement.

4. Agencement (200) selon l'une des revendications précédentes, **caractérisé en ce que** le raidisseur (100) et la caisse (30) et/ou le raidisseur (100) et le côté de caisse (20) sont fixés par soudage.

5. Agencement (200) selon l'une des revendications 1 à 4, **caractérisé en ce que** la première aile (110) du raidisseur (100) et/ou la deuxième aile (120) du raidisseur (100) sont dotées de bords tombants (114, 124).

6. Véhicule automobile (1), **caractérisé en ce qu'**il comprend un agencement (200) selon l'une des revendications précédentes.

## Patentansprüche

1. Anordnung (200) innerhalb eines Kraftfahrzeugs (1), umfassend eine Karosserieseite (20) und eine Karosserie (30), wobei die Anordnung (200) eine Versteifung (100) der Karosserieseite (20) umfasst, beispielsweise eine Versteifung (100) einer vorderen Spitze (21) der Karosserieseite (20), wobei die Versteifung (100) einerseits an der Karosserie (30) und andererseits an der Karosserieseite (20) befestigt ist, wobei die Versteifung (100) die Form eines Winkels aufweist, der einen ersten Flügel (110) und einen zweiten Flügel (120) umfasst, wobei der zweite Flügel (120) der Versteifung (100) ein Ohr (121) umfasst, insbesondere ein Ohr (121), das an einem distalen Ende (122) des zweiten Flügels (120) in Bezug auf den ersten Flügel (110) angeordnet ist, **dadurch gekennzeichnet, dass** eine vordere Spitze (21) der Karosserieseite (20) einerseits einer oberen Kante (12B) eines vorderen Flügels (12) und andererseits einer hinteren Kante (11A) einer vorderen Haube (11) zugewandt ist.

2. Anordnung (200) nach dem vorangehenden Anspruch, **dadurch gekennzeichnet, dass** der erste Flügel (110) der Versteifung (100) an der Karosserie (30), insbesondere an einer vorderen Fußverstärkung (10) der Karosserie (30), befestigt ist, wobei der zweite Flügel (120) der Versteifung (100) an der Karosserieseite (20), insbesondere an der vorderen Spitze (21) der Karosserieseite (20), befestigt ist.

3. Anordnung (200) nach Anspruch 1 oder 2, **dadurch gekennzeichnet, dass** sich der erste Flügel (110) der Versteifung (100) quer oder im Wesentlichen quer erstreckt, wobei sich der zweite Flügel (120) der Versteifung (100) längs oder im Wesentlichen längs erstreckt.

4. Anordnung (200) nach einem der vorangehenden Ansprüche, **dadurch gekennzeichnet, dass** die Versteifung (100) und die Karosserie (30) und/oder die Versteifung (100) und die Karosserieseite (20) durch Schweißen befestigt sind.

5. Anordnung (200) nach einem der Ansprüche 1 bis 4, **dadurch gekennzeichnet, dass** der erste Flügel (110) der Versteifung (100) und/oder der zweite Flügel (120) der Versteifung (100) mit abfallenden Kanten (114, 124) versehen sind.

6. Kraftfahrzeug (1), **dadurch gekennzeichnet, dass** es eine Anordnung (200) nach einem der vorangehenden Ansprüche umfasst.

## Claims

1. Arrangement (200) within a motor vehicle (1) comprising a body side (20) and a body (30), the arrangement (200) comprising a body side (20) stiffener (100), such as a stiffener (100) of a front tip (21) of the body side (20), the stiffener (100) being fastened, on the one hand, to the body (30) and, on the other hand, to the body side (20), the stiffener having the form of an angle bracket comprising a first wing (110) and a second wing (120), the second wing (120) of the stiffener (100) comprising a lug (121), in particular a lug (121) arranged at a distal end (122) of the second wing (120) with respect to the first wing (110), **characterized in that** a front tip (21) of the body side (20) comes opposite an upper edge (12B) of a front wing (12) on the one hand and opposite a rear edge (11A) of a front bonnet (11) on the other hand.

2. Arrangement (200) according to the preceding claim, **characterized in that** the first wing (110) of the stiffener (100) is fastened to the body (30), in particular to an A-pillar reinforcement (10) of the body (30), the second wing (120) of the stiffener (100) being fastened to the body side (20), in particular to the front tip (21) of the body side (20) .

3. Arrangement (200) according to Claim 1 or 2, **characterized in that** the first wing (110) of the stiffener (100) extends transversely or substantially transversely, the second wing (120) of the stiffener (100) extending longitudinally or substantially longitudinally.

4. Arrangement (200) according to one of the preceding claims, **characterized in that** the stiffener (100) and the body (30) and/or the stiffener (100) and the body side (20) are fastened by welding.

5. Arrangement (200) according to one of Claims 1 to 4, **characterized in that** the first wing (110) of the stiffener (100) and/or the second wing (120) of the stiffener (100) are provided with drop edges (114, 124) .

6. Motor vehicle (1), **characterized in that** it comprises an arrangement (200) according to one of the preceding claims.
